(19) Europäisches Patentamt / European Patent Office / Office européen des brevets

(11) **EP 3 872 603 A1**

(12) **EUROPEAN PATENT APPLICATION**
published in accordance with Art. 153(4) EPC

(43) Date of publication:
01.09.2021 Bulletin 2021/35

(51) Int Cl.:
**G06F 1/32** *(2019.01)*

(21) Application number: 19889477.6

(22) Date of filing: 25.09.2019

(86) International application number:
**PCT/CN2019/107933**

(87) International publication number:
**WO 2020/108061 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.11.2018 CN 201811427995

(71) Applicant: GUANGDONG OPPO MOBILE TELECOMMUNICATIONS CORP., LTD.
Dongguan, Guangdong 523860 (CN)

(72) Inventors:
• YANG, Hai
  Dongguan, Guangdong 523860 (CN)
• HU, Jie
  Dongguan, Guangdong 523860 (CN)

(74) Representative: Ipside
7-9 Allées Haussmann
33300 Bordeaux Cedex (FR)

(54) **VIDEO PROCESSING METHOD AND APPARATUS, ELECTRONIC DEVICE AND STORAGE MEDIUM**

(57) Embodiments of the present application relate to the technical field of electronic devices, and disclosed thereby are a video processing method and apparatus, an electronic device and a storage medium. The method is applied to an electronic device, and the electronic device comprises a central processor and a graphics processor; the method comprises: detecting the power consumption of the electronic device when the electronic device plays back a video resource file; determining whether the power consumption is greater than a power consumption threshold; and when the power consumption is greater than the power consumption threshold, controlling the graphics processor to decode and render the video resource file. The video processing method and apparatus, electronic device and storage medium provided by embodiments of the present application reduce the power consumption of a central processor by means of controlling a graphics processor to decode and render a video resource file when the power consumption of an electronic device is greater than a power consumption threshold, thereby increasing the playback effect of the video resource file.

EP 3 872 603 A1

```
┌──────────────────────────────────────────────┐
│ when an electronic device plays back a video   │───S110
│ resource file, a power consumption of the      │
│ electronic device is detected                  │
└──────────────────────────────────────────────┘
                      │
         No           ▼
      ┌──────< whether the power consumption is greater than >────S120
      │         < a power consumption threshold is determined >
      │                    │
      │                    │ Yes
      │                    ▼
      │  ┌──────────────────────────────────────────────┐
      │  │ when the power consumption is greater than the │───S130
      │  │ power consumption threshold, the graphics      │
      │  │ processor is controlled to decode and render the│
      │  │ video resource file                            │
      │  └──────────────────────────────────────────────┘
```

FIG. 2

## Description

### CROSS-REFERENCE TO RELATED APPLICATIONS

The present application claims a priority of Chinese Patent Application No. 201811427995.4, filed on November 27, 2018, which is hereby incorporated in its entirety by reference for all purposes.

### TECHNICAL FIELD

The present application relates to the technical field of electronic devices, and in particular, to a video processing method, an apparatus, an electronic device, and a storage medium.

### BACKGROUND

With development of science and technology, electronic devices have become one of the most commonly used electronic products in people's daily lives. In addition, users often play games and watch videos through electronic devices.

### SUMMARY OF THE DISCLOSURE

In view of the above problem, the present application provides a video processing method, an apparatus, an electronic device, and a storage medium to solve the above problem.

In a first aspect, an embodiment of the present application provides a video processing method applicable to an electronic device, wherein, the electronic device comprises a central processor and a graphics processor; the method comprises: detecting a power consumption of the electronic device when the electronic device plays back a video resource file; determining whether the power consumption is greater than a power consumption threshold; and controlling the graphics processor to decode and render the video resource file when the power consumption is greater than the power consumption threshold.

In a second aspect, an embodiment of the present application provides a video processing apparatus applicable to an electronic device, wherein, the electronic device comprises a central processor and a graphics processor; the apparatus comprises: a detecting module configured to detect a power consumption of the electronic device when the electronic device plays back a video resource file; a determining module configured to determine whether the power consumption is greater than a power consumption threshold; and a processing module configured to control the graphics processor to decode and render the video resource file when the power consumption is greater than the power consumption threshold.

In a third aspect, an embodiment of the present application provides an electronic device comprising: a central processor; a graphics processor; a memory; and one or more application program; wherein the one or more application program is stored in the memory and configured to be executed by the central processor, and the one or more application program is configured to execute the above method.

In a fourth aspect, an embodiment of the present application provides a computer-readable storage medium, the computer-readable storage medium stores program codes, and the program codes is capable of being called by a processor to execute the above method.

### BRIEF DESCRIPTION OF THE DRAWINGS

In order to describe technical solutions in embodiments of the present application more clearly, drawings required being used in description of the embodiments will be simply introduced below. Obviously, the drawings in the following description are merely some embodiments of the present application. For one of ordinary skill in the art, it is also possible to obtain other drawings according to these drawings without paying any creative work.

FIG. 1 shows a schematic flow chart of playing a video provided by an embodiment of the present application.
FIG.2 shows a schematic flow chart of a video processing method provided by an embodiment of the present application.
FIG. 3 shows a schematic flow chart of a video processing method provided by another embodiment of the present application.
FIG. 4 shows a schematic flow chart of a video processing method provided by another embodiment of the present application.
FIG. 5 shows a schematic flow chart of a video processing method provided by another embodiment of the present application.

FIG. 6 shows a schematic flow chart of a video processing method provided by another embodiment of the present application.

FIG. 7 shows a schematic flow chart of the operation S530 of the video processing method shown in FIG. 6 of the present application.

FIG. 8 shows a block diagram of modules of a video processing apparatus provided by an embodiment of the present application.

FIG. 9 shows a block diagram of an electronic device of an embodiment of the present application, which is configured to execute a video processing method according to an embodiment of the present application.

FIG. 10 shows a memory unit of an embodiment of the present application, which is configured to store or carry program codes realizing a video processing method according to an embodiment of the present application.

## DETAILED DESCRIPTION

In order to enable those skilled in the art to better understand solutions of the present application, technical solutions in embodiments of the present application will be clearly and completely described below in accompany with the drawings in the embodiments of the present application.

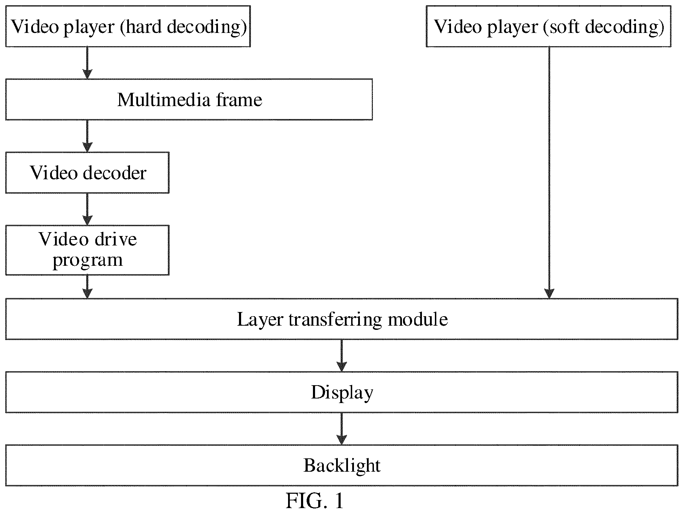

Please refer to FIG. 1. FIG. 1 shows a flow of video playback. Specifically, when an operating system obtains data to be played, the next job is to parse audio and video data. Generally, a video file is composed of two parts: a video stream and an audio stream. In different video formats, packaging formats of audios and videos are different. A process of synthesizing an audio stream and a video stream into a file is called muxer, and vice versa, a process of separating an audio stream and a video stream from a media file is called demuxer. Playing a video file needs to separate an audio stream and a video stream from a file stream and decode them respectively. Decoded video frames can be directly rendered, and audio frames can be sent to a buffer of an audio output device for playback. Of course, time stamps of video rendering and audio playback need to be controlled to be synchronized.

Specifically, video decoding may include hard decoding and soft decoding. Hardware decoding is to transfer a part of video data that was originally to be all processed by a central processor (central processing unit, CPU) to a graphics processor (graphics processing unit, GPU) to process. Since parallel computing capability of a GPU is much higher than that of a CPU, thus a load on the CPU can be greatly reduced. When the CPU occupancy rate is lower, some other programs can be executed at the same time. Of course, for a better processor, such as i5 2320, or any type of quad-core processor from AMD, not only can hard decoding performed, but also soft decoding can be performed.

Specifically, as shown in FIG. 1, a multimedia framework obtains a video file to be played on a client end through an API interface with the client end, and delivers it to a video codec. Among them, Media Framework is a multimedia framework in the Android system, and three parts: MediaPlayer, MediaPlayerService, and Stagefrightplayer constitute a basic framework of Android multimedia. The multimedia framework partially adopts a C/S structure. MediaPlayer serves as a Client end of the C/S structure, and MediaPlayerService and Stagefrightplayer serve as a server end of the C/S structure. They bear the responsibility of playing multimedia files. Through Stagefrightplayer, the server end completes requests of the client end request and responds. Video Decode is a type of super decoder that integrates the most commonly used decoding and playback for audios and videos, and is used to decode video data.

Among them, soft decoding means using a CPU to decode a video through software. Hard decoding refers to independent completion of video decoding tasks through dedicated daughter card equipment without the help of the CPU.

Regardless of whether it is hard decoding or soft decoding, after video data is decoded, the decoded video data will be sent to a layer transfer module (SurfaceFlinger), and the decoded video data will be rendered and synthesized by SurfaceFlinger and then displayed on a screen. Among them, SurfaceFlinger is an independent Service. It receives Surfaces of all Windows as input. According to parameters such as ZOrder, transparency, size, position, etc., it calculates a position of each Surface in a final composite image, delivers it to HWComposer or OpenGL to generate a final display Buffer, and then displays it to a specific display device.

As shown in FIG. 1, in soft decoding, the CPU decodes the video data and delivers it to SurfaceFlinger for rendering and synthesis; while in hard decoding, the GPU decodes data and then delivers it to SurfaceFlinger for rendering and synthesis. Moreover, SurfaceFlinger will call the GPU to achieve rendering and synthesis for images, and display them on the display screen.

As an implementation manner, in a process of image rendering, the CPU obtains a video resource file sent from the client end, decodes the video resource file, obtains decoded video data, and then sends the video data to the GPU. After the GPU completes rendering, a rending result is put into a frame buffer, and then a video controller will read data in the frame buffer line by line according to an HSync signal, and transfer it to the display to display after digital-to-analog conversion.

Specifically, when the CPU obtains the video resource file, it can be chosen to use the CPU to decode the video file to be played, send decoded data to SurfaceFlinger for rendering and synthesis, and then display. It is also possible that the CPU sends the video resource file to the GPU, after the video resource file is decoded by the image processing circuit of the GPU, it is sent to SurfaceFlinger for rendering and synthesis, and then displayed. Currently, the CPU rendering mode is generally adopted by default, however, because a CPU further needs to process a large number of other operations, using the CPU for video rendering will invisibly cause unnecessary waste of resources of an electronic device. If the GPU rendering mode is used by default, although using a GPU processing images can reduce a load pressure of a CPU, GPU processing will take up a lot of memory. This causes that it is unreasonable to choose an image processor or a central processing unit to process video files.

In response to the above problems, the inventor has discovered through long-term research and proposed a video processing method, an apparatus, an electronic device, and a storage medium provided by the embodiments of the present application. When a power consumption of an electronic device is greater than a power consumption threshold, a graphics processor is controlled to decode and render a video resource file, so as to reduce a power consumption of a central processor and improve playback effect of the video resource file. Among them, specific video processing methods will be described in detail in the subsequent embodiments.

Embodiments

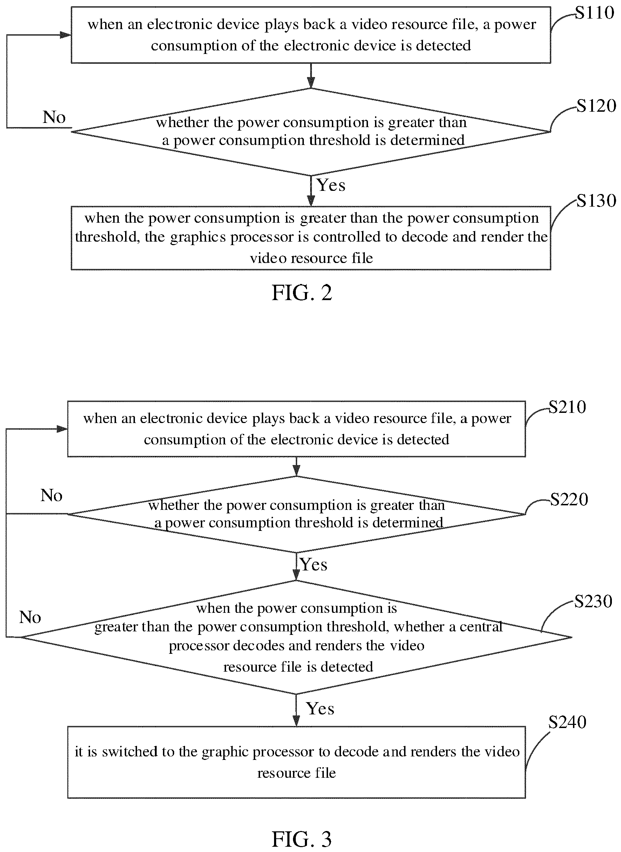

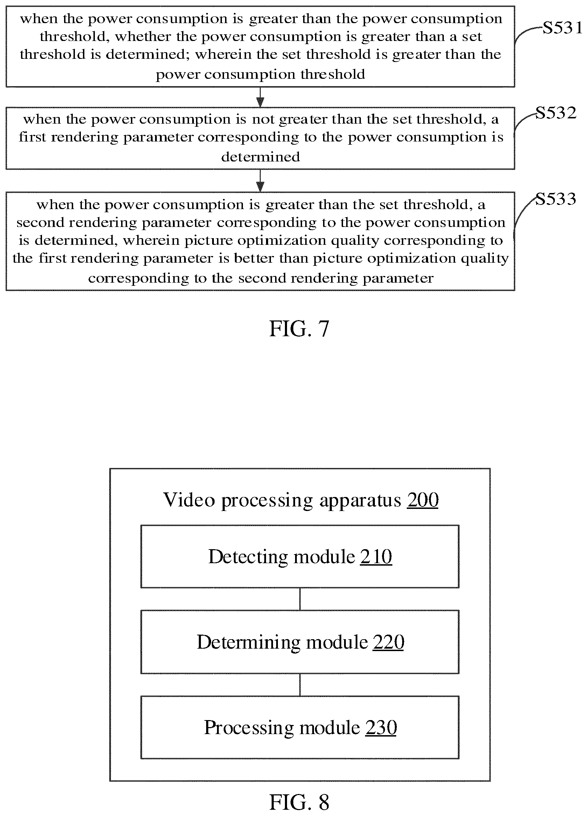

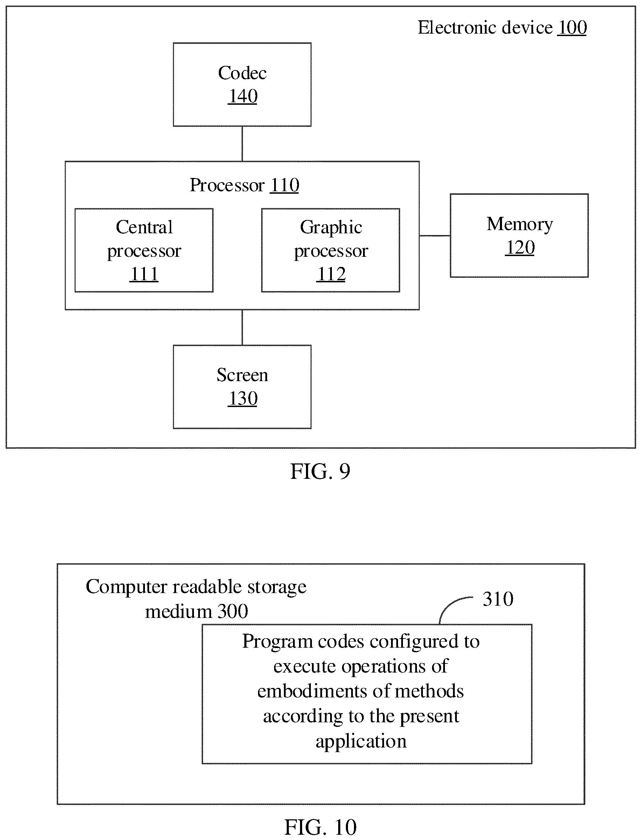

Referring to FIG. 2, FIG. 2 shows a schematic flow chart of a video processing method provided by an embodiment of the present application. The video processing method is used to control a graphics processor to decode and render a video resource file when a power consumption of an electronic device is greater than a power consumption threshold, so as to reduce a power consumption of a central processing unit and improve playback effect of the video resource file. In a specific embodiment, the video processing method is applied in a video processing apparatus 200 as shown in FIG. 8 and an electronic device 100 equipped with the video processing apparatus 200 (FIG. 9). The following will take an electronic device as an example to illustrate a specific process of this embodiment. The electronic device includes a graphics processor and a central processor. Of course, it is understandable that the electronic device applied in this embodiment may be a smart phone, a tablet computer, a wearable electronic device, a vehicle-mounted device, a gateway, etc., and is not specifically limited here. The following will elaborate on the process shown in FIG. 2, and the video processing method may specifically include the following operations.

Operation S110: when an electronic device plays back a video resource file, a power consumption of the electronic device is detected.

In this embodiment, the video resource file played by the electronic device may include a video resource file played in a foreground of the electronic device, a video resource file played in a background of the electronic device, and a video resource file played switchably in the foreground and background of the electronic device, which are not specifically limited here. Among them, the video resource file played in the foreground refers to a video resource file that can usually interact with a user and can be displayed in the foreground; when it is not visible, it will be suspended; the video resource file played in the background refers to a file having very limited interaction with a user; except during a configuration period, it is hidden during the other time of its lifetime; the video resource file played switchably in the foreground and the background of the electronic device refers to a video resource file that can be switched between the foreground and the background at will. Optionally, in this embodiment, the video resource file played by the electronic device is a video resource file played in the foreground of the electronic device.

Among them, the video resource file may be a local resource file, and may also be a network resource file, which is not limited here. Specifically, if the video resource file is a local resource file, the video resource file can be downloaded in advance from the server and stored locally by the electronic device. When the video resource file is played, the electronic device can directly read it locally and play, for example, can read directly from a memory of the electronic device and play. As another way, if the video resource file is a network resource file, the video resource file can be obtained online from a server and played by the electronic device, wherein the electronic device can obtain the video resource file online from the server via a wireless network, and can also obtain the video resource file online from the server via a data network, which is not limited here; wherein the data network may include a 2G network, a 3G network, a 4G network, or a 5G network.

In addition, when the video resource file is a network resource file, the electronic device may be installed with a video playback application, and display an application icon corresponding to the video playback application on a desktop of the electronic device. When a touch control operation of a user targeting the application icon is detected, the electronic device can run the video playback application as a response, and obtain the video resource file from the server through a network and play; as another way, the electronic device can be installed with a browser and enter a video playback interface through a webpage of the browser based on an operation of a user, and obtain the video resource file from the server under the video playback interface and play.

In this embodiment, when it is determined that the electronic device plays a video resource file, a power consumption of the electronic device can be detected, where the power consumption of the electronic device is a difference between an input power and an output power, that is, a power loss. Generally, the power consumption of the electronic device includes a CPU power consumption, a GPU power consumption, etc.; among them, taking the CPU power consumption as an example, the CPU power consumption can be understood as a thermal design power (TDP) power consumption, which is an index reflecting a heat discharge of the central processor and means heat released when the central processor reaches its maximum load, of which the unit is watts (W). Furthermore, TDP is an index reflecting heat released by processors, and is a maximum heat limit which must be capable of being dissipated by a cooling system of an electronic device. In addition, TDP is thermal effect of CPU current and other heat generated when the CPU is working. TDP power consumption is usually used as an important reference index for heat dissipation/consumption reduction design of an electronic device, such as a motherboard design, a heat dissipation system design, a heat dissipation design, etc. The larger the TDP, the greater the heat generated by the CPU when working. For a heat dissipation system, TDP needs to be used as the lowest index/basic index for the design of the heat dissipation capacity. As a way, a power consumption of an electronic device can be detected through an application of the power consumption test type installed on the electronic device, so that the power consumption of the electronic device can be obtained, which is not repeated here.

Operation S 120: whether the power consumption is greater than a power consumption threshold is determined.

In this embodiment, the electronic device is provided with a power consumption threshold, and the power consumption threshold is used as a determination basis for the power consumption of the electronic device. It can be understood that the power consumption threshold may be stored locally in advance by the electronic device, and may also be set at the time of determination, which is not limited here. In addition, the power consumption threshold may be automatically configured by the electronic device, may be manually set by a user, and may also be transmitted to the electronic device after being configured completely by the server, which is not limited here. As a way, after obtaining the power consumption of the electronic device, the power consumption is compared with the power consumption threshold to determine whether the power consumption is greater than the power consumption threshold.

Operation S130: when the power consumption is greater than the power consumption threshold, the graphics processor is controlled to decode and render the video resource file.

Among them, when a determination result represents that the power consumption of the electronic device is greater than the power consumption threshold, it indicates that if a CPU of the electronic device continues to process the video playback resource, the playback effect of the video resource file may be affected, for example, problems of lagging and flickering may appear. Therefore, as a way, a GPU can be controlled to decode and render video resource files to reduce a working frequency of the CPU and ensure normal playback of video resource files and normal operation of the electronic device. As a way, the GPU decodes a video resource file, so as to obtain multiple frames of image data corresponding to the video resource file, that is, video frame data. Specifically, the CPU calls a playback module to parse the video resource file, so as to obtain a video stream and an audio stream corresponding to the video resource file. Among them, the playback module can be a MediaExtractor module in an Android system, and can also be an FFmpeg module; wherein the FFmpeg module is an open-source cross-platform video and audio streaming framework, it belongs to free software and adopts the LGPL or GPL license (depending on selected components). It provides a complete solution for recording, converting and streaming audios and videos, and it contains a rich audio/video codec library libavcodec.

Then, the CPU sends the video stream to the GPU. After the GPU decodes the video stream, it obtains multiple frames of image data corresponding to the video stream, and then synthesizes the multiple frames of image data. Specifically, a synthesis method may be synthesis in a preset frame buffer, that is, rendering and synthesizing multiple frames of image data in a manner of on-screen rendering, and may also be rendering and synthesizing multiple frames of image data in a manner of off-screen rendering.

As an implementation, an off-screen rendering buffer is set in the GPU in advance. Specifically, the GPU will call a rendering client module to render and synthesize the multiple frames of image data to be rendered and send them to a display screen for display. Specifically, the rendering client module may be an OpenGL module. A final location of the OpenGL rendering module is in a frame buffer. The frame buffer is a series of two-dimensional pixel storage arrays, which include a color buffer, a depth buffer, a stencil buffer, and an accumulation buffer. By default, OpenGL uses a frame buffer provided by a window system.

The GL_ARB_framebuffer_object extension of OpenGL provides a way to create an additional frame buffer object (FBO). By using the frame buffer object, OpenGL can redirect a frame buffer provided by an originally drawn window to the FBO.

Then another buffer is set outside the frame buffer through the FBO, that is, an off-screen rendering buffer. Then, the obtained multiple frames of image data are stored into the off-screen rendering buffer. Specifically, the off-screen rendering buffer may be a storage space corresponding to the GPU, that is, the off-screen rendering buffer itself has no space for storing images, but after mapping with a storage space in the graphics processor, the image is actually stored in a storage space in the graphics processor corresponding to the off-screen rendering buffer.

By the manner of binding the multiple frames of image data with the off-screen rendering buffer, the multiple frames of image data can be stored in the off-screen rendering buffer, that is, the multiple frames of image data can be found in the off-screen rendering buffer.

After the multiple frames of image data are stored in the off-screen rendering buffer, the multiple frames of image data can be rendered in the off-screen rendering buffer. Specifically, the multiple frames of buffer data can be subjected to display enhancement processing, for example, image parameter optimization for the multiple frames of image data in the off-screen rendering buffer, wherein the image parameter optimization includes at least one of exposure enhancement, denoising, edge sharpening, contrast increase, and saturation increase.

Specifically, the video resource file displayed by the electronic device is decoded image content. Since the decoded image content is data in RGBA format, in order to optimize the image content, it is required to convert the data in RGBA format into HSV format. Specifically, a histogram of the image content is obtained, the histogram is counted to obtain parameters for converting the data in the RGBA format into the HSV format, and the data in the RGBA format is converted into the HSV format according to the parameters.

Among them, the exposure enhancement is used to increase the brightness of the image, and a brightness value of an area in which the brightness value is low can be increased through the histogram of the image. In addition, the brightness of the image can also be increased by nonlinear superposition, specifically, I represents a darker image to be processed, T represents a brighter image after processing, thus the exposure enhancement method is $T(x)=I(x)+(1-I(x))*I(x)$. Among them, T and I are both images with values of [0,1]. If the effect of once is not good, the algorithm can iterate multiple times.

Among them, denoising for the image content is used to remove noise of the image. Specifically, the image is often disturbed and affected by various noises during generation and transmission processes, thereby causing the image to be degraded. This will generate bad effect on subsequent image processing and visual effect of the image. There are many types of noise, such as electrical noise, mechanical noise, channel noise, and other noise. Therefore, in order to suppress noise, improve image quality, and facilitate higher-level processing, pre-processing for denoising must be performed for the image. From the point of view of probability distribution of noise, it can be divided into Gaussian noise, Rayleigh noise, gamma noise, exponential noise, and uniform noise.

Specifically, the image can be denoised by a Gaussian filter, wherein the Gaussian filter is a linear filter that can effectively suppress noise and smooth the image. Its working principle is similar to that of an average filter, and both take an average value of pixels in a filter window as an output. Its coefficient of a window template is different from that the average filter, a template coefficient of the average filter is a constant 1, while a template coefficient of the Gaussian filter decreases as the distance from the center of the template increases. Therefore, the Gaussian filter has a smaller blurring degree of the image in comparison with the average filter.

For example, a 5×5 Gaussian filter window is generated, and a center position of the template is taken as an origin of coordinates for sampling. Bring coordinates of each position of the template into the Gaussian function, an obtained value is a coefficient of the template. Thus, convolving the Gaussian filter window with the image can denoise the image.

Among them, edge sharpening is used to make a blurred image become clearer. There are generally two methods for image sharpening: one is differentiation, and the other is high-pass filtering.

Among them, contrast increase is used to enhance image quality of the image, so that colors in the image are more vivid. Specifically, contrast stretching is a method of image enhancement, and it also belongs to grayscale transformation operations. Through gray scale transformation, a gray scale value is stretched to the entire 0-255 interval, then a contrast thereof is obviously greatly enhanced. The following formula can be used to map a gray value of a certain pixel to a larger gray space.

$$I(x,y)=[(I(x,y)-Imin)/(Imax-Imin)](MAX-MIN)+MIN$$

Among them, Imin, Imax are the minimum gray value and the maximum gray value of an original image, and MIN and MAX are the minimum value and the maximum value of gray of a gray space to be stretched to.

Thus, after rendering of the multiple frames of image data is completed, the multiple frames of image data can be sent to a frame buffer corresponding to the screen, wherein the frame buffer corresponds to the screen and is used to store data that needs to be displayed on the screen, such as Framebuffer, Framebuffer is a kind of driver interface that appears in an operating system kernel. Taking an Android system as an example, Linux is working in a protected mode, so a user mode process cannot use an interrupt call provided in a graphics card BIOS to realize directly writing data and displaying it on the screen, like a DOS system. Linux abstracts the device Framebuffer for the user process to realizing directly writing data and displaying it on the screen. A Framebuffer mechanism imitates the function of a graphics card, and a video memory can be operated directly through reading and writing by the Framebuffer. Specifically, the Framebuffer can be regarded as a reflection of a display memory; after it is mapped to a process address space, reading and writing operations can be performed directly, and written data can be displayed on the screen.

The frame buffer can be regarded as a space for storing data, the CPU or GPU puts data to be displayed into the frame buffer. Furthermore, the Framebuffer itself does not have any ability to calculate data, and a video controller reads the data in the Framebuffer in accordance with a screen refresh frequency and displays it on the screen.

Multiple frames of image data are read from the frame buffer and displayed on the screen. Specifically, after the multiple frames of image data are stored in the frame buffer, and the graphics processor detects data written in the frame buffer, optimized multiple frames of image data are read from the frame buffer and displayed on the screen.

As an implementation, the GPU reads multiple frames of image data frame by frame from the frame buffer according to a refresh frequency of the screen, and displays the image data on the screen after rendering and synthesis processing.

In the video processing method provided by an embodiment of the present application, a power consumption of an electronic device is detected when the electronic device plays back a video resource file; whether the power consumption is greater than a power consumption threshold is determined; and when the power consumption is greater than the power consumption threshold, a graphics processor is controlled to decode and render the video resource file. Thus, by controlling the graphics processor to decode and render the video resource file when the power consumption of the electronic device is greater than the power consumption threshold, the power consumption of the central processor is reduced, and the playback effect of the video resource file is improved.

Referring to FIG. 3, FIG. 3 shows a schematic flow chart of a video processing method provided by another embodiment of the present application. The following will elaborate on the process shown in FIG. 3, and the video processing method may specifically include the following operations.

Operation S210: when an electronic device plays back a video resource file, a power consumption of the electronic device is detected.

Operation S220: whether the power consumption is greater than a power consumption threshold is determined.

Among them, specific description for the operation S210 and the operation S220 can refer to the operation S110 and the operation S120, and is not repeated here.

Operation S230: when the power consumption is greater than the power consumption threshold, whether a central processor decodes and renders the video resource file is detected.

Among them, the electronic device can decode and render the video resource file through the CPU, and can also decode and render the video resource file through the GPU. Therefore, in this embodiment, when a determination result represents that the power consumption of the electronic device is greater than the power consumption threshold, a main body that decodes and renders the video resource file can be detected, that is, whether the CPU decodes and renders the video resource file is detected, or whether the GPU decodes and renders the video resource file is detected, or whether both the CPU and the GPU decode and render the video resource file is detected; wherein, when both the CPU and the GPU decode and render the video resource file, the CPU and the GPU can process different video frames of the video resource file at the same time.

Operation S240: when the central processor decodes and renders the video resource file, it is switched to the graphics processor to decode and renders the video resource file.

Among them, when it is detected that the CPU decodes and renders the video resource file, or it is detected that both the CPU and the GPU decode and render the video resource file, it indicates that the CPU participates in decoding and rendering for the video resource file. Therefore, in order to reduce a working frequency of the CPU and ensure decoding and rendering effects of the video resource file, it is possible to switch to the graphics processor to decode and render the video resource file. Specifically, when the video resource file is initially decoded and rendered by the CPU, it is possible to prohibit the CPU from continuing to decode and render remained video resource file to be played, and switch to the GPU to decode and render the video resource file to be played; when the video resource file is initially decoded and rendered by both the CPU and the GPU, video frames decoded and rendered by the CPU in the remained video resource file to be played are switched to be decoded and rendered by the GPU, thereby achieving effect of reducing the working frequency of the CPU.

In this video processing method provided by another embodiment of the present application, when an electronic device plays back a video resource file, a power consumption of the electronic device is detected; whether the power consumption is greater than a power consumption threshold is determined; when the power consumption is greater than the power consumption threshold, whether a central processor decodes and renders the video resource file is detected; when the central processor decodes and renders the video resource file, it is switched to the graphics processor to decode and renders the video resource file. Compared with the video processing method shown in FIG. 2, in this embodiment, when the power consumption is greater than the power consumption threshold and the central processor decodes and renders the video resource file, the video resource file is then decoded and rendered by the graphics processor, so as to reduce the power consumption of the central processor and improve the playback effect of the video resource file.

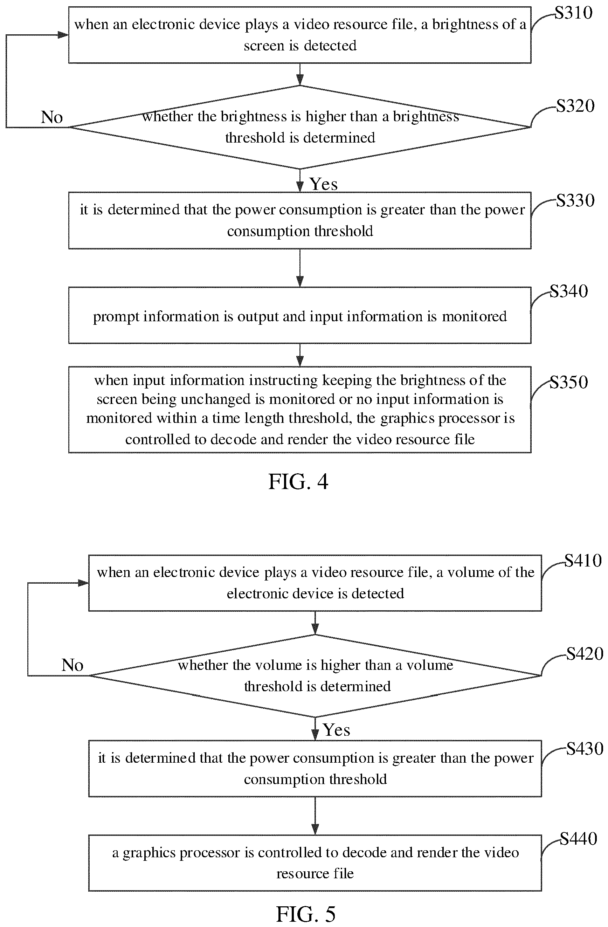

Referring to FIG. 4, FIG. 4 shows a schematic flow chart of a video processing method provided by another embodiment of the present application. In this embodiment, an electronic device further includes a screen. The following will elaborate on the process shown in FIG. 4, and the video processing method may specifically include the following operations.

Operation S310: when an electronic device plays a video resource file, a brightness of a screen is detected.

As a way, the electronic device includes a screen, wherein a displayable area of the screen can be used to display content such as texts, pictures, icons, videos, etc. In this embodiment, the screen is used to display video resource files. With development of touch control technology, screens provided in more and more electronic devices can also be touch screens. In a case of providing a touch screen, when it is detected that users performs touch control operations such as drags, clicks, double clicks, slides, and the like on a touch screen, an electronic device can respond to the touch operations of users.

In this embodiment, the screen of the electronic device will be lit when displaying a video resource file, and when a brightness of the screen of the electronic device is too high, it will cause a too large power consumption of the electronic device. Therefore, it is possible to determine whether the power consumption of the electronic device is too large by determining whether the brightness of the screen of the electronic device is too high. As a way, when it is determined that the electronic device is playing a video resource file, the brightness of the screen of the electronic device can be determined. Optionally, it is possible to detect the brightness of the screen of the electronic device through a built-in brightness detection module or a brightness detection application program of the electronic device, which is not repeated here.

Operation S320: whether the brightness is higher than a brightness threshold is determined.

Among them, the electronic device is provided with a brightness threshold, and the brightness threshold is used as a determination basis for the brightness of the screen of the electronic device. Among them, it can be understood that the brightness threshold may be stored locally in advance by the electronic device, and may also be set when determining, which is not limited here. In addition, the brightness threshold can be automatically set by the electronic device, can be manually set by a user, and can also be transmitted to the electronic device after being configured by the server, which is not limited here. As a way, after the brightness threshold of the electronic device is obtained, the brightness of the screen of the electronic device is compared with the brightness threshold to determine whether the brightness of the screen is higher than the brightness threshold.

Operation S330: when the brightness is higher than the brightness threshold, it is determined that the power consumption is greater than the power consumption threshold.

In this embodiment, when a determination result represents that the brightness of the screen is not higher than the brightness threshold, it is represented that a power consumption caused by the brightness of the screen is low. Therefore, it can be determined that the power consumption of the electronic device is not greater than the power consumption threshold. On the contrary, when the determination result represents that the brightness of the screen is higher than the brightness threshold, it is represented that the power consumption caused by the brightness of the screen is too high. Therefore, it can be determined that the power consumption of the electronic device is higher than the power consumption threshold.

Operation S340: prompt information is output and input information is monitored.

As a way, when it is determined that the brightness of the screen of the electronic device is higher than the brightness threshold, that is, when it is determined that the power consumption of the electronic device is higher than the power consumption threshold, the electronic device may output prompt information, wherein the prompt information may be output in the form of voice, may be output in the form of graphics and text, and may also be output in the form of transmission to other electronic devices, which is not limited here. In addition, the output prompt information can be used to prompt a user corresponding to the electronic device that the screen of the electronic device is too bright or the power consumption of the electronic device is too large, so that the user can respond based on the prompt information. Of course, the prompt information can also include selection information, for example, the selection information may include "whether to lower the power consumption of the electronic device" or "whether to lower the brightness of the screen of the electronic device", etc., so that the user triggers a selection operation based on the selection information.

Further, after the electronic device sends out the prompt information, it can monitor input information based on the prompt information. Specifically, text information, voice information, and selection operations input based on the prompt information by the user can be monitored, which is not limited here. As a way, taking monitoring selection operation as an example, the electronic device monitors selection operations acting on multiple selection controls corresponding to multiple selection information; and when a selection operation triggered by a user is monitored, the selection operation is received. Among them, the selection operation may be a touch control operation, and the touch control operation may include at least a single-finger click, a multi-finger click, a single-finger long press, a multi-finger long press, a heavy press, multiple clicks, a sliding operation, and the like.

Operation S350: when input information instructing keeping the brightness of the screen being unchanged is monitored or no input information is monitored within a time length threshold, the graphics processor is controlled to decode and render the video resource file.

Among them, based on the prompt information, the user can choose to input information to instruct whether the electronic device lowers the brightness of the screen, and can also choose not to input information, that is, the electronic device may receive the input information, and may also receive no input information. Therefore, as a way, the electronic device can be provided with a time length threshold. Similarly, the time length threshold may be stored locally in advance by the electronic device, and may also be set when detecting. In addition, the time length threshold can be automatically set by the electronic device, can be manually set by a user, and can also be transmitted to the electronic device after being configured by the server, which is not limited here. Further, if no input information is monitored within the time length threshold, it represents that the user expects the electronic device to keep the current brightness of the screen; therefore, the GPU can be automatically controlled to decode and render the video resource file, so as to realize reducing the working frequency of the CPU and improving the playback effect of the video resource file at the same time of maintaining the current brightness of the screen of the electronic device.

Similarly, if input information input by the user is monitored, and the input information is used to instruct to keep the current brightness of the screen being unchanged, it represents that the user expects to continue watching the video resource file under the condition of the screen brightness. Therefore, the GPU can be automatically controlled to decode and render the video resource file, so as to automatically realize reducing the working frequency of the CPU and improving the playback effect of the video resource file at the same time of maintaining the current brightness of the screen of the electronic device.

In this video processing method provided by another embodiment of the present application, when an electronic device plays a video resource file, a brightness of a screen is detected; whether the brightness is higher than a brightness threshold is determined; when the brightness is higher than the brightness threshold, it is determined that the power consumption is greater than the power consumption threshold; prompt information is output and input information is monitored; when input information instructing keeping the brightness of the screen being unchanged is monitored or no input information is monitored within a time length threshold, the graphics processor is controlled to decode and render the video resource file. Compared with the video processing method shown in FIG. 2, in this embodiment, when the brightness of the screen is higher than the brightness threshold, it is determined that the power consumption is greater than the power consumption threshold and the prompt information is output; the graphics processor is controlled to decode and render the video resource file according to a selection of the user, thereby improving adaptability and user experience.

Referring to FIG. 5, FIG. 5 shows a schematic flow chart of a video processing method provided by another embodiment of the present application. The following will elaborate on the process shown in FIG. 5, and the video processing method may specifically include the following operations.

Operation S410: when an electronic device plays a video resource file, a volume of the electronic device is detected.

As a way, since a video resource file includes both an image resource file and an audio resource file, when the image resource file is displayed on the screen of the electronic device, the electronic device can output the audio resource file through a speaker, a microphone, a headset, or the like. Among them, when the output volume of the electronic device is too large, it will cause a too large power consumption of the electronic device. Therefore, it is possible to determine whether the power consumption of the electronic device is too large by determining whether the volume of the electronic device is too large. As one way, when it is determined that the electronic device is playing the video resource file, the volume of the electronic device can be detected. Optionally, the volume of the electronic device can be detected through a built-in volume detection module or a volume detection application program of the electronic device.

Operation S420: whether the volume is higher than a volume threshold is determined.

Among them, the electronic device may be provided with a volume threshold, and the volume threshold is used as a determination basis for the volume of the electronic device. It can be understood that the volume threshold may be stored locally in advance by the electronic device, and may also be set at the time of determination, which is not limited here. In addition, the volume threshold can be automatically set by the electronic device, can be manually set by a user, and can also be transmitted to the electronic device after being configured by the server, which is not limited here. As a way, after the volume threshold of the electronic device is obtained, the volume of the electronic device is compared with the volume threshold to determine whether the volume of the electronic device is higher than the volume threshold.

Operation 430: when the volume is higher than the volume threshold, it is determined that the power consumption is greater than the power consumption threshold.

In this embodiment, when the determination result represents that the volume of the electronic device is not higher than the volume threshold, it represents that the power consumption caused by the volume of the electronic device is low. Therefore, it can be determined that the power consumption of the electronic device is not greater than the power consumption threshold. On the contrary, when the determination result represents that the volume of the electronic device is higher than the volume threshold, it represents that the power consumption caused by the volume of the electronic device is high. Therefore, it can be determined that the power consumption of the electronic device is higher than the power consumption threshold.

Operation S440: a graphics processor is controlled to decode and render the video resource file.

Similarly, when it is determined that the volume of the electronic device is higher than the volume threshold, it is possible to output prompt information and monitor input information, and when monitoring that the volume of the electronic device is kept being unchanged or when no input information is monitored within a time length threshold, the graphics processor is controlled to decode and render the video resource file. Among them, the specific implementation manner can refer to operation S350, which is not repeated here.

In this video processing method provided by another embodiment of the present application, when an electronic device plays a video resource file, a volume of the electronic device is detected; whether the volume is higher than a volume threshold is determined; when the volume is higher than the volume threshold, it is determined that the power consumption is greater than the power consumption threshold; and a graphics processor is controlled to decode and render the video resource file. Compared with the video processing method shown in FIG. 2, in this embodiment, it is determined that the power consumption is greater than the power consumption threshold when the volume of the electronic device is higher than the volume threshold, and then the video resource file is decoded and rendered through the graphics processor, thereby improving display effect.

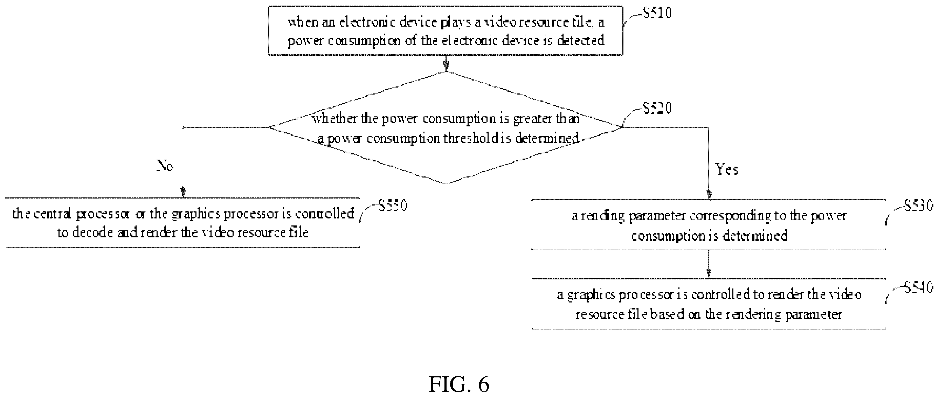

Referring to FIG. 6, FIG. 6 shows a schematic flow chart of a video processing method provided by another embodiment of the present application. The following will elaborate on the process shown in FIG. 6, and the video processing method may specifically include the following operations.

Operation S510: when an electronic device plays a video resource file, a power consumption of the electronic device is detected.

Operation S520: whether the power consumption is greater than a power consumption threshold is determined.

Among them, specific description for the operation S510 and the operation S520 can refer to the operation S110 and the operation S120, and is not repeated here.

Operation S530: when the power consumption is greater than the power consumption threshold, a rending parameter corresponding to the power consumption is determined.

Among them, the electronic device can store multiple power consumptions and multiple rendering parameters, and further store correspondences among the multiple power consumptions and the multiple rendering parameters; wherein the correspondences may include one power consumption corresponding to one rendering parameter or multiple rendering parameters, and may also include one rendering parameter corresponding to one or more power consumptions, which is not limited here. Among them, the correspondences among the power consumptions and the rendering parameters can be preset by the user and then stored in the electronic device, can be automatically preset and then stored by the electronic device, and can also be preset by a server and then sent to the electronic device, which is not limited here. Among them, in this embodiment, rendering effect or optimization effect of each of the multiple rendering parameters on the video resource file may be different, that is, when processing the same video resource file through each of the multiple rendering parameters, achieved rendering effect may be different.

Referring to FIG. 7, FIG. 7 shows a schematic flow chart of the operation S530 of the video processing method shown in FIG. 6 of the present application. The following will elaborate on the process shown in FIG. 7, and the method may specifically include the following operations.

Operation S531: when the power consumption is greater than the power consumption threshold, whether the power consumption is greater than a set threshold is determined; wherein the set threshold is greater than the power consumption threshold.

As a way, the electronic device may be provided with a set threshold, wherein the set threshold is greater than the power consumption threshold. Similarly, the set threshold may be stored locally in advance by the electronic device, and may also be set at the time of determination. In addition, the set threshold can be automatically configured by the electronic device, can be manually set by a user, and can also be transmitted to the electronic device after being configured by a server, which is not limited here. Therefore, in this embodiment, when it is determined that the power consumption of the electronic device is greater than the power consumption threshold, the power consumption of the electronic device can be subsequently compared with the set threshold to determine whether the power consumption of the electronic device is greater than the set threshold.

Operation S532: when the power consumption is not greater than the set threshold, a first rendering parameter corresponding to the power consumption is determined.

Operation S533: when the power consumption is greater than the set threshold, a second rendering parameter corresponding to the power consumption is determined, wherein picture optimization quality corresponding to the first rendering parameter is better than picture optimization quality corresponding to the second rendering parameter.

Among them, the rendering parameter may include a first rendering parameter and a second rendering parameter, and picture optimization quality corresponding to the first rendering parameter is better than picture optimization quality corresponding to the second rendering parameter. As a way, the electronic device can select different rendering parameters to render the video resource file according to different power consumptions, so as to achieve different rendering effect. In this embodiment, when the power consumption of the electronic device is greater than the power consumption threshold, based on a range where the power consumption of the electronic device is located, a rendering parameter corresponding thereto can be selected. Specifically, when the power consumption is not greater than the set threshold, that is, when the power consumption is between the power consumption threshold and the set threshold, it can be determined that the power consumption corresponds to the first rendering parameter; when the power consumption is higher than a set power consumption, it can be determined that the power consumption corresponds to the second rendering parameter. That is, the greater the power consumption of the electronic device, the lower the optimization quality of the corresponding video resource file, so as to achieve the effect of reducing power consumption; the smaller the power consumption of the electronic device is smaller, the higher the optimization quality of the corresponding video resource file, so as to improve the playback effect of the video resource file.

Operation S540: a graphics processor is controlled to render the video resource file based on the rendering parameter.

Further, after determining the rendering parameter corresponding to the power consumption, the graphics processor can be controlled to perform rendering processing for the video resource file based on the rendering parameter. It is understandable that the graphics processor can decode the video resource file to obtain multiple video frames, and then perform rendering processing for the multiple video frames based on the rendering parameter.

Operation S550: when the power consumption is not greater than the power consumption threshold, the central processor or the graphics processor is controlled to decode and render the video resource file.

On the contrary, when it is determined that the power consumption is not greater than the power consumption threshold, it represents that decoding and rendering the video resource file by a CPU will not cause a too large power consumption of the electronic device, that is, decoding and rendering the video resource file by the CPU will not affect playback of the video resource file. Therefore, a CPU or a GPU can be controlled to decode and render video resource files. Among them, using the CPU to decode and render video resource files can adopt on-screen rendering, and can also adopt off-screen rendering to render and synthesize multiple frames of image data obtained after decoding by the CPU and then display them on a screen, which is not limited here.

In this video processing method provided by another embodiment of the present application, when an electronic device plays a video resource file, a power consumption of the electronic device is detected; whether the power consumption is greater than a power consumption threshold is determined; when the power consumption is greater than the power consumption threshold, a rending parameter corresponding to the power consumption is determined, and a graphics processor is controlled to render the video resource file based on the rendering parameter; when the power consumption is not greater than the power consumption threshold, the central processor or the graphics processor is controlled to decode and render the video resource file. Compared with the video processing method shown in FIG. 2, in this embodiment, when the power consumption is greater than the power consumption threshold, the video resource file is rendered with a rendering parameter corresponding to the power consumption; and when the power consumption is not greater than the power consumption threshold, the central processor or the graphics processor is controlled to decode and render the video resource file, so as to improve reasonability of rendering.

Referring to FIG. 8, FIG. 8 shows a module block diagram of a video processing apparatus 200 provided by an embodiment of the present application. The video processing apparatus 200 is applied in the aforesaid electronic device, the electronic device includes a central processor and a graphics processor. The following will elaborate on the block diagram shown in FIG. 8, the video processing apparatus 200 includes a detecting module 210, a determining module 220, and a processing module 230.

Among them, the detecting module 210 is configured to detect a power consumption of the electronic device when the electronic device plays a video resource file. Further, the electronic device further includes a screen, the detecting module 210 includes a brightness detecting submodule and a volume detecting submodule; wherein, in the brightness detecting submodule and the volume detecting submodule: the brightness detecting submodule is configured to detect a brightness of the screen; the volume detecting submodule is configured to detect a volume of the electronic device.

The determining module 220 is configured to determine whether the power consumption is greater than a power consumption threshold. Further, the determining module 220 includes a brightness judging submodule, a brightness determining submodule, a volume judging submodule, and a volume determining submodule.

Among them, the brightness judging submodule is configured to determine whether the brightness is higher than a brightness threshold.

The brightness determining submodule is configured to determine that the power consumption is greater than the power consumption threshold when the brightness is higher than the brightness threshold.

The volume judging submodule is configured to determine whether the volume is higher than a volume threshold.

The volume determining submodule is configured to determine that the power consumption is greater than the power consumption threshold when the volume is higher than the volume threshold.

The processing module 230 is configured to control the graphics processor to decode and render the video resource file when the power consumption is greater than the power consumption threshold. Further, the processing module 230 includes a detecting submodule, a switching submodule, a monitoring submodule, a first controlling submodule, a rendering parameter determining submodule, and a second controlling submodule.

Among them, the detecting submodule is configured to detect whether the central processor decodes and renders the video resource file when the power consumption is greater than the power consumption threshold.

The switching submodule is configured to switch to the graphics processor to decode and render the video resource file when the central processor decodes and renders the video resource file.

The monitoring submodule is configured to output prompt information and monitor input information when the brightness is higher than the brightness threshold.

The first controlling submodule is configured to control the graphics processor to decode and render the video resource file when input information instructing keeping the brightness of the screen being unchanged is monitored or no input information is monitored within a time length threshold.

The rendering parameter determining submodule is configured to determine a rending parameter corresponding to the power consumption when the power consumption is higher than the power consumption threshold. Further, the rendering parameter determining submodule includes a judging unit, a first determining unit, and a second determining unit.

Among them, the judging unit is configured to determine whether the power consumption is greater than a set threshold when the power consumption is greater than the power consumption threshold, wherein the set threshold is greater than the power consumption threshold.

The first determining unit is configured to determine a first rendering parameter corresponding to the power consumption when the power consumption is not greater than the set threshold.

The second determining unit is configured to determine a second rendering parameter corresponding to the power consumption when the power consumption is higher than the set threshold, wherein picture optimization quality corresponding to the first rendering parameter is better than picture optimization quality corresponding to the second rendering parameter.

The second controlling submodule is configured to control the graphics processor to render the video resource file based on the rendering parameter.

Further, the video processing apparatus 200 further includes a controlling module, wherein the controlling module is configured to control the central processor or the graphics processor to decode and render the video resource file when the power consumption is not greater than the power consumption threshold.

Those skilled in the art can clearly understand that, for convenience and conciseness of description, specific working processes of the apparatus and modules described above can refer to corresponding processes in the foregoing method embodiments, which are be repeated here.

In these embodiments provided by the present application, mutual couples among modules can be electrical couples, mechanical couples, or couples in other forms.

In addition, various functional modules in each embodiment of the present application may be integrated in one processing module, or each module may also physically exist alone, or two or more modules may also be integrated into one module. The above-mentioned integrated modules can be implemented in the form of hardware, and can also be implemented in the form of software functional modules.

Referring to FIG. 9, which shows a structural block diagram of an electronic device 100 provided by an embodiment of the present application. The electronic device 100 can be an electronic device that can run applications, such as a smart phone, a tablet computer, an electronic book, etc. The electronic device 100 in the present application can include one or more of the following components: a processor 110, a memory 120, a screen 130, a codec 140, and one or more application program; wherein the one or more application program can be stored in the memory 120 and configured to be executed by one or more processor 110, and the one or more application program is configured to execute the methods described in the aforesaid method embodiments.

Among them, the processor 110 may include one or more processing core. The processor 110 uses various interfaces and lines to connect various parts of the entire electronic device 100, and executes various functions of the electronic device 100 and processes data by running or executing instructions, programs, code sets, or instruction sets stored in the memory 120 and calling data stored in the memory 120. Optionally, the processor 110 may be implemented using at least one kind of hardware form in a digital signal processing (DSP), a field-programmable gate array (FPGA), and a programmable logic array (PLA). The processor 110 may be integrated with one or a combination of several of a central processing unit (CPU), a graphics processing unit (GPU), and a modem. Among them, the CPU mainly processes an operating system, user interfaces, application programs, etc.; the GPU is used for rendering and drawing of display content; the modem is used for processing wireless communication. It can be understood that the above-mentioned modem may not be integrated into the processor 110, but may be implemented by a single communication chip.

Specifically, the processor 110 can include one or a combination of several of a central processing unit 111 (CPU), a graphics processing unit 112 (GPU), and a modem. Among them, the CPU mainly processes an operating system, user interfaces, client ends, etc.; the GPU is used for rendering and drawing of display content; the modem is used for processing wireless communication. It can be understood that the above-mentioned modem may not be integrated into the processor 110, but may be implemented by a single communication chip.

The memory 120 may include a random access memory (RAM), and may also include a read-only memory (ROM). The memory 120 may be used to store instructions, programs, codes, code sets or instruction sets. The memory 120 may include a program storage area and a data storage area, wherein the program storage area may store instructions for implementing an operating system, instructions for implementing at least one function (such as a touch control function, a sound playback function, an image playback function, etc.), instructions for implementing the following various method embodiments, etc. The storage data area can also store data created by the terminal 100 during use (such as a phone book, audio and video data, chat record data, etc.).

The codec 140 can be used to encode or decode for video data, and then transmit decoded video data to the screen 130 to display; wherein the codec 140 can be a GPU, a special DSP, a FPGA, an ASIG chip, etc.

Referring to FIG. 10, which shows a structural block diagram of a computer-readable storage medium provided by an embodiment of the present application. The computer-readable storage medium 300 stores program codes, and the program codes can be called by a processor to execute the methods described in the aforesaid method embodiments.

The computer-readable storage medium 300 may be an electronic memory such as a flash memory, an EEPROM (Electrically Erasable Programmable Read Only Memory), an EPROM, a hard disk, or an ROM. Optionally, the computer-readable storage medium 300 includes a non-transitory computer-readable storage medium. The computer-readable storage medium 300 has a storage space for program codes 310 for executing any method step in the above-mentioned methods. These program codes can be read from one or more computer program products or written into the one or more computer program products. The program code 310 may be compressed in a suitable form, for example.

In conclusion, in the video processing method, apparatus, electronic device and storage medium provided by embodiments of the present application, when the electronic device plays back a video resource file, a power consumption of the electronic device is detected; whether the power consumption is greater than a power consumption threshold is determined; and when the power consumption is greater than the power consumption threshold, a graphics processor is controlled to decode and render the video resource file. By controlling the graphics processor to decode and render the video resource file when the power consumption of the electronic device is greater than the power consumption threshold, the power consumption of a central processor is reduced, and the playback effect of the video resource file is improved.

Finally, it should be noted that the above embodiments are only used to illustrate technical solutions of the present application, but not to limit them; although the present application has been described in detail with reference to the foregoing embodiments, those of ordinary skill in the art should understand: it is still possible to modify the technical solutions described in the foregoing embodiments, or equivalently replace some technical features therein; and these modifications or replacements do not make the essence of corresponding technical solutions deviate from spirits and scopes of the technical solutions of the embodiments of the present application.

**Claims**

1. A video processing method applicable to an electronic device, wherein the electronic device comprises a central processor and a graphics processor, and the method comprises:

   detecting a power consumption of the electronic device in response to that the electronic device plays back a video resource file;
   determining whether the power consumption is greater than a power consumption threshold; and
   controlling the graphics processor to decode and render the video resource file in response to the power consumption being greater than the power consumption threshold.

2. The method according to claim 1, wherein the controlling the graphics processor to decode and render the video resource file in response to the power consumption being greater than the power consumption threshold comprises:

   detecting whether the central processor decodes and renders the video resource file in response to the power consumption being greater than the power consumption threshold; and
   switching to the graphics processor to decode and render the video resource file in response to that the central processor decodes and renders the video resource file.

3. The method according to claim 2, wherein the switching to the graphics processor to decode and render the video resource file in response to that the central processor decodes and renders the video resource file comprises:
   switching to the graphics processor to decode and render the video resource file in response to that both the central processor and the graphics processor decode and render the video resource file.

4. The method according to claim 3, wherein the switching to the graphics processor to decode and render the video resource file in response to that both the central processor and the graphics processor decode and render the video resource file comprises:

obtaining a remained video resource file in the video resource file in response to that both the central processor and the graphics processor decode and render the video resource file; and
decoding and rendering the remained video resource file using the graphics processor.

5. The method according to any one of claims 1-4, wherein the electronic device further comprises a screen, and the detecting a power consumption of the electronic device comprises:

detecting a brightness of the screen;
the determining whether the power consumption is greater than a power consumption threshold comprises:

determining whether the brightness is higher than a brightness threshold; and
determining that the power consumption is greater than the power consumption threshold in response to the brightness being higher than the brightness threshold.

6. The method according to claim 5, wherein the controlling the graphics processor to decode and render the video resource file in response to the power consumption being greater than the power consumption threshold comprises:

outputting prompt information and monitoring input information in response to the brightness being higher than the brightness threshold; and
controlling the graphics processor to decode and render the video resource file in response to monitoring input information instructing keeping the brightness of the screen being unchanged or monitoring no input information within a time length threshold.

7. The method according to claim 6, wherein the outputting prompt information and monitoring input information in response to the brightness being higher than the brightness threshold comprises:
outputting prompt information through voice and/or graphics and text and monitoring input information in response to the brightness being higher than the brightness threshold.

8. The method according to claim 6, wherein the outputting prompt information and monitoring input information in response to the brightness being higher than the brightness threshold comprises:
outputting selection information and monitoring a selection operation triggered based on the selection information in response to the brightness being higher than the brightness threshold.

9. The method according to claim 8, wherein the selection operation comprises at least one of a single-finger click operation, a multi-finger click operation, a single-finger long press operation, a multi-finger long press operation, a heavy press operation, multiple click operation, and sliding operation.

10. The method according to any one of claims 5-9, further comprising:
determining that the power consumption is not greater than the power consumption threshold in response to the brightness being not higher than the brightness threshold.

11. The method according to any one of claims 1-4, wherein the detecting a power consumption of the electronic device further comprises:

detecting a volume of the electronic device;
the determining whether the power consumption is greater than a power consumption threshold comprises:

determining whether the volume is higher than a volume threshold; and
determining that the power consumption is greater than the power consumption threshold in response to the volume being higher than the volume threshold.

12. The method according to claim 11, wherein the controlling the graphics processor to decode and render the video resource file in response to the power consumption being greater than the power consumption threshold comprises:

outputting prompt information and monitoring input information in response to the volume being higher than the volume threshold; and

controlling the graphics processor to decode and render the video resource file in response to monitoring input information instructing keeping the volume of the electronic device being unchanged or monitoring no input information within a time length threshold.

13. The method according to any one of claims 1-12, wherein the controlling the graphics processor to decode and render the video resource file in response to the power consumption being greater than the power consumption threshold comprises:

determining a rendering parameter corresponding to the power consumption in response to the power consumption being greater than the power consumption threshold; and
controlling the graphics processor to render the video resource file based on the rendering parameter.

14. The method according to claim 13, wherein the determining a rendering parameter corresponding to the power consumption in response to the power consumption being greater than the power consumption threshold comprises:

determining whether the power consumption is greater than a set threshold in response to the power consumption being greater than the power consumption threshold, wherein the set threshold is greater than the power consumption threshold;
determining a first rendering parameter corresponding to the power consumption in response to the power consumption being not greater than the set threshold; and
determining a second rendering parameter corresponding to the power consumption in response to the power consumption being greater than the set threshold, wherein picture optimization quality corresponding to the first rendering parameter is better than picture optimization quality corresponding to the second rendering parameter.

15. The method according to claim 13 or 14, wherein the determining a rendering parameter corresponding to the power consumption in response to the power consumption being greater than the power consumption threshold comprises: determining a rendering parameter corresponding to the power consumption based on correspondences among multiple power consumptions and multiple rendering parameters stored in advance in response to the power consumption being greater than the power consumption threshold.

16. The method according to any one of claims 13-15, wherein the controlling the graphics processor to render the video resource file based on the rendering parameter comprises:

controlling the graphics processor to decode the video resource file to obtain multiple video frames; and
rendering the multiple video frames based on the rendering parameter.

17. The method according to any one of claims 1-16, further comprising:
controlling the central processor or the graphics processor to decode and render the video resource file in response to the power consumption being not greater than the power consumption threshold.

18. A video processing apparatus applicable to an electronic device, wherein the electronic device comprises a central processor and a graphics processor, and the apparatus comprises:

a detecting module configured to detect a power consumption of the electronic device in response to that the electronic device plays back a video resource file;
a determining module configured to determine whether the power consumption is greater than a power consumption threshold; and
a processing module configured to control the graphics processor to decode and render the video resource file in response to the power consumption being greater than the power consumption threshold.

19. An electronic device comprising:

a central processor;
a graphics processor;
a memory; and
one or more application program; wherein the one or more application program is stored in the memory and configured to be executed by the central processor, and the one or more application program is configured to execute the method according to any one of claims 1-17.

20. A computer-readable storage medium, wherein the computer-readable storage medium stores program codes, and the program codes is capable of being called by a processor to execute the method according to any one of claims 1-17.

Video player (hard decoding)

Video player (soft decoding)

Multimedia frame

Video decoder

Video drive program

Layer transferring module

Display

Backlight

FIG. 1

when an electronic device plays back a video resource file, a power consumption of the electronic device is detected ⎯S110

whether the power consumption is greater than a power consumption threshold is determined ⎯S120

No

Yes

when the power consumption is greater than the power consumption threshold, the graphics processor is controlled to decode and render the video resource file ⎯S130

FIG. 2

when an electronic device plays back a video resource file, a power consumption of the electronic device is detected ⎯S210

whether the power consumption is greater than a power consumption threshold is determined ⎯S220

No

Yes

when the power consumption is greater than the power consumption threshold, whether a central processor decodes and renders the video resource file is detected ⎯S230

No

Yes

it is switched to the graphic processor to decode and renders the video resource file ⎯S240

FIG. 3

when an electronic device plays a video resource file, a brightness of a screen is detected ⟋S310

No ⟋ whether the brightness is higher than a brightness threshold is determined ⟍ S320

Yes

it is determined that the power consumption is greater than the power consumption threshold ⟋S330

prompt information is output and input information is monitored ⟋S340

when input information instructing keeping the brightness of the screen being unchanged is monitored or no input information is monitored within a time length threshold, the graphics processor is controlled to decode and render the video resource file ⟋S350

FIG. 4

when an electronic device plays a video resource file, a volume of the electronic device is detected ⟋S410

No ⟋ whether the volume is higher than a volume threshold is determined ⟍ S420

Yes

it is determined that the power consumption is greater than the power consumption threshold ⟋S430

a graphics processor is controlled to decode and render the video resource file ⟋S440

FIG. 5

when an electronic device plays a video resource file, a power consumption of the electronic device is detected — S510

whether the power consumption is greater than a power consumption threshold is determined — S520

No

Yes

the central processor or the graphics processor is controlled to decode and render the video resource file — S550

a rendering parameter corresponding to the power consumption is determined — S530

a graphics processor is controlled to render the video resource file based on the rendering parameter — S540

FIG. 6

when the power consumption is greater than the power consumption threshold, whether the power consumption is greater than a set threshold is determined; wherein the set threshold is greater than the power consumption threshold ⟋S531

when the power consumption is not greater than the set threshold, a first rendering parameter corresponding to the power consumption is determined ⟋S532

when the power consumption is greater than the set threshold, a second rendering parameter corresponding to the power consumption is determined, wherein picture optimization quality corresponding to the first rendering parameter is better than picture optimization quality corresponding to the second rendering parameter ⟋S533

FIG. 7

Video processing apparatus 200

Detecting module 210

Determining module 220

Processing module 230

FIG. 8

Electronic device 100

Codec
140

Processor 110

Central
processor
111

Graphic
processor
112

Memory
120

Screen
130

FIG. 9

Computer readable storage
medium 300

310

Program codes configured to
execute operations of
embodiments of methods
according to the present
application

FIG. 10

## INTERNATIONAL SEARCH REPORT

| International application No. |
| --- |
| **PCT/CN2019/107933** |

**A.    CLASSIFICATION OF SUBJECT MATTER**

G06F 1/32(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, EPODOC, WPI: 功耗, 渲染, 解码, 参数, 中央处理器, 图形处理器, 阈值, 预设值, 预定值, 门限值, power, cost, decoding, parameter, romance, CPU, GPU, threshold value

**C.    DOCUMENTS CONSIDERED TO BE RELEVANT**

| Category* | Citation of document, with indication, where appropriate, of the relevant passages | Relevant to claim No. |
| --- | --- | --- |
| X | CN 107680029 A (SHENZHEN TINNO WIRELESS TECHNOLOGY CO., LTD. et al.) 09 February 2018 (2018-02-09) <br> description, paragraphs 0005-0052 | 1-4, 17-20 |
| Y | CN 107680029 A (SHENZHEN TINNO WIRELESS TECHNOLOGY CO., LTD. et al.) 09 February 2018 (2018-02-09) <br> description, paragraphs 0005-0052 | 5-16 |
| Y | CN 106200872 A (VIVO COMMUNICATION TECHNOLOGY CO., LTD.) 07 December 2016 (2016-12-07) <br> description, paragraphs 0025-0124 | 5-12 |
| Y | CN 108021219 A (HUAWEI TECHNOLOGIES CO., LTD.) 11 May 2018 (2018-05-11) <br> description, paragraphs [0005]-[0084] | 13-16 |
| PX | CN 109379627 A (OPPO GUANGDONG MOBILE COMMUNICATION CO., LTD.) 27 November 2018 (2018-11-27) <br> description, paragraphs 0002-0143 | 1-20 |
| A | US 2014192207 A1 (JI, Jinsong et al.) 10 July 2014 (2014-07-10) <br> entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2019** | **28 November 2019** |

| Name and mailing address of the ISA/CN | Authorized officer |
| --- | --- |
| **China National Intellectual Property Administration** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**EP 3 872 603 A1**

## INTERNATIONAL SEARCH REPORT
### Information on patent family members

International application No.

**PCT/CN2019/107933**

| Patent document cited in search report | | | Publication date (day/month/year) | Patent family member(s) | | | Publication date (day/month/year) |
|---|---|---|---|---|---|---|---|
| CN | 107680029 | A | 09 February 2018 | None | | | |
| CN | 106200872 | A | 07 December 2016 | None | | | |
| CN | 108021219 | A | 11 May 2018 | WO | 2018082412 | A1 | 11 May 2018 |
| CN | 109379627 | A | 27 November 2018 | None | | | |
| US | 2014192207 | A1 | 10 July 2014 | None | | | |

Form PCT/ISA/210 (patent family annex) (January 2015)

24

**EP 3 872 603 A1**

**REFERENCES CITED IN THE DESCRIPTION**

**Patent documents cited in the description**

- CN 201811427995